(19)

Europäisches Patentamt
European Patent Office
Office européen des brevets

(11)  **EP 1 770 259 B1**

(12)  **EUROPEAN PATENT SPECIFICATION**

(45) Date of publication and mention
of the grant of the patent:
**05.11.2008  Bulletin 2008/45**

(51) Int Cl.:
*F02B 27/02* *(2006.01)*    *F02B 75/20* *(2006.01)*

(21) Application number: **06113932.5**

(22) Date of filing: **15.05.2006**

(54) **A method for a variable air intake system, and an internal combustion engine comprising a variable air intake system.**

Verfahren für ein variables Ansaugsystem und Brennkraftmaschine mit einem variablen Ansaugsystem

Méthode pour un système d'admission à géométrie variable et moteur à combustion interne avec système d'admission à geometrie variable

(84) Designated Contracting States:
**DE GB SE**

(30) Priority:  **03.10.2005  EP 05109144**

(43) Date of publication of application:
**04.04.2007   Bulletin 2007/14**

(73) Proprietor: **Ford Global Technologies, LLC**
**Dearborn, MI 48126 (US)**

(72) Inventors:
 • **Möller, Peter**
  **431 68, Mölndal (SE)**
 • **Svenske, Erik**
  **412 72, Göteborg (SE)**

(74) Representative: **Bergquist, Kjell Gunnar**
**Albihns AB**
**P.O. Box 142**
**401 22 Göteborg (SE)**

(56) References cited:
**EP-A- 1 655 466**      **DE-A1- 19 727 669**
**DE-B3- 10 346 734**    **US-B1- 6 546 789**

 • **PATENT ABSTRACTS OF JAPAN vol. 011, no. 098 (M-575), 27 March 1987 (1987-03-27) & JP 61 247822 A (MAZDA MOTOR CORP), 5 November 1986 (1986-11-05)**

**Description**

TECHNICAL FIELD

The present invention refers to a method for diagnosing a variable air intake system of an internal combustion engine, and an internal combustion engine comprising a variable air intake system.

BACKGROUND

In known art, a number of methods for diagnosing valve functions in a non-variable engine air intake manifold have been suggested, see for example US5138874A.

A variable air intake system for a combustion engine, for example as described in US5638785A, usually comprises valves for guiding the intake air through conduits in dependence of the engine speed. For the function of such systems, it is critical that the valves are fully operational according to the design intentions of the system, i.e. that they open and close to guide the airflow as desired. Sensor deviations can cause erroneous diagnose and affect the operation of the engine negatively.

DE 197 27 669 relates to a method for monitoring the function of an induction pipe flap for changing over the induction pipe of an internal combustion engine has the following steps. (a) the induction pressure is measured on the basis of the speed, measured by a device to do this, as well as of the air mass flow for at least two different induction pipe flap positions, measured by a device to do this, and simultaneously to this by a device to measure pressure. (b) the differences of the calculated and measured induction pressures are formed for the different induction pipe flap positions. They are evaluated for a diagnosis of the induction flap.

SUMMARY

The object of the invention is to provide a large degree of certainty regarding diagnose information obtained regarding a variable air intake system of an internal combustion engine.

This object is reached with a method for diagnosing a variable air intake system of an internal combustion engine, comprising the steps of

- determining a first value of an air intake related parameter at a first engine speed,
- determining a second value of the air intake related parameter at a second engine speed,
- comparing the first and second values of the air intake related parameter, and
- establishing, based on the comparison of the first and second values of the air intake related parameter, a functional status of the variable air intake system.

Since the method according to the invention monitors the function of the variable air intake system by comparing two air intake related parameter values at respective engine speeds, the result is a low dependency of sensor tolerance deviations and ambient conditions influencing the sensors. Specifically, the method according to the invention is less vulnerable to such sensor deviations, compared to a method involving analysis of absolute sensor values or absolute values of an air intake related parameter based on sensor values. Thereby, the inventive method increases the degree of certainty regarding the diagnose information.

For this presentation, the air intake related parameter shall be understood as a parameter that can be used to derive a status of the engine air intake system. The air intake related parameter must be correlated to the volumetric efficiency of the engine. This is of considerable advantage, since the volumetric efficiency is closely related to the operation of the air intake manifold, and since it provides relevant information irrespective of engine operational settings and conditions, such as the throttle setting, fuel supply, and ignition setting.

In particular, the method according to the invention makes use of a measure of the quotient between measured throttle air flow $\theta_m$ and estimated throttle air flow as the air intake related parameter. The use of this quota makes the method less sensitive to off set faults, which is advantageous since at most operating conditions of the engine, the influence of functional status of the variable intake system on intake air parameter is weak and therefore sensitive to signal noise.

Furthermore, it may be particularly advantageous to generate the estimated throttle air flow $\theta_e$ from an estimate $P_e$ of the intake manifold pressure, which is in turn generated an estimate of engine air flow generated from volumetric efficiency data. By using an estimate of intake manifold pressure, separate pressure sensor would not be needed, which reduces the cost of the system.

Advantageous embodiments are defined in the dependent claims, and are more closely described below.

The object stated above is also reached with an internal combustion engine according to any of the claims 9-16.

DESCRIPTION OF THE FIGURES

Below, the invention will be described in greater detail with reference to the drawing, in which

- fig. 1 shows schematically parts of an internal combustion engine and a control system therefore,
- fig. 2 is a diagram of the volumetric efficiency as a function of engine speed concerning the engine in fig. 1,
- fig. 3, fig. 4 and fig. 5 are block diagrams depicting steps in methods in connection to the engine in fig. 1,
- fig. 6 shows schematically parts of an alternative internal combustion engine and a control system therefore,
- fig. 7 is a diagram of the volumetric efficiency as a function of engine speed concerning the engine in fig. 6,
- fig. 8 and fig. 9 are block diagrams depicting steps in methods in connection to the engine in fig. 6,
- fig. 10 shows a block scheme of a method for determining the a measure Q of the quotient between measured throttle air flow $\theta_m$ and estimated throttle air flow $\theta_e.$, and
- fig. 11 shows values of the quotinet Q as a function of rpm for different faults

DETAILED DESCRIPTION

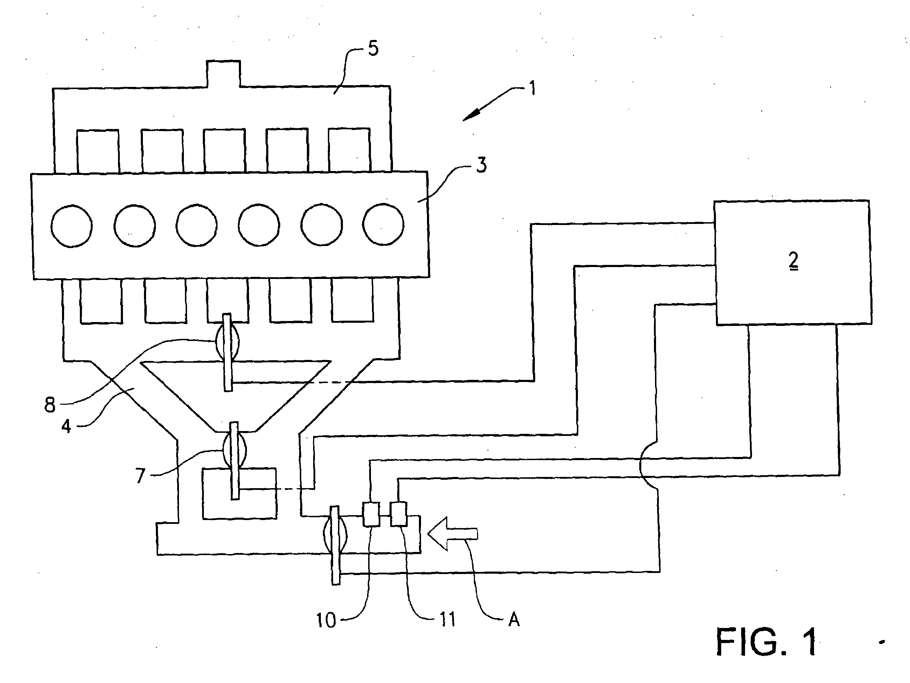

Fig. 1 shows schematically parts of an internal combustion engine 1. The engine comprises a cylinder block 3, in this example provided with six cylinders arranged in a line, a variable air intake manifold 4, an exhaust manifold 5 and engine control means 2. The engine control means 2, here also referred to as an engine control unit, ECU, is provided for controlling various functions of the engine 1. The ECU 2 can be provided as one physical unit, or several interconnected elements. In operation air is introduced in the intake manifold 4, as depicted by the arrow A, by the control of a throttle valve 6, in turn controlled by the ECU.

Upstream of the throttle valve 6 an airflow sensor 10, e.g. a thermal airflow meter as described in US6662640B2, is provided and connected to the ECU 2 for providing values of the mass air flow (MAP). The mass air flow (MAP) is the flow through thte throttle into the mainfold. Also, upstream of the throttle valve 6 a temperature sensor 11 is provided and connected to the ECU 2 for providing values of the intake air temperature (IAT). The sensors 10, 11 are known in the art and not described further here.

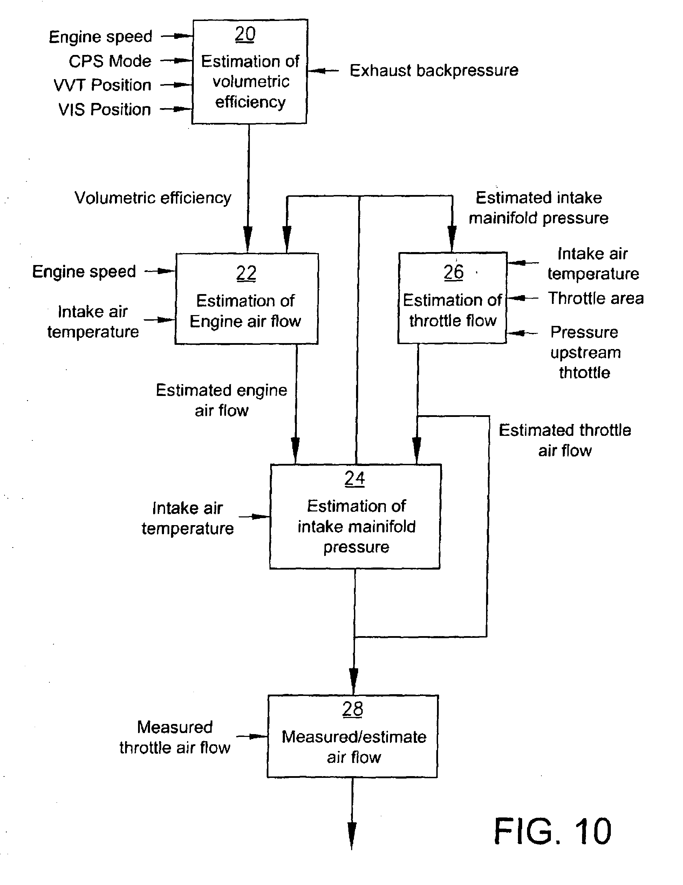

The ECU can determine values of an air intake related parameter. In this embodiment, the air intake related parameter is a measure Q of the quotient between measured throttle air flow $\theta_m$ and estimated throttle air flow $\theta_e./(\theta_m/\theta_e.)$ In figure 10, a block scheme of a method for determining the a measure Q of the quotient between measured throttle air flow $\theta_m$ and estimated throttle air flow $\theta_e.$ is shown. In figure 10, an estimate volumetric efficiency $n_{vol}$ of the engine is determined in a first functional block 20. The estimate of the volumetric efficiency $n_{vol}$ is provided as a mapped function by use relevant input parameters such as of engine speed Ne, cam profile shifting mode, variable valve time position, exhaust back pressure and information about assumed operating condition of a variable intake system, such as whether valves arranged in the intake system are opened or closed.

In a second functional block 22, the engine air flow EAF may be determined from the estimate of the volumetric efficiency $n_{vol}$, engine speed Ne, intake air temperature IAT and manifold absolute pressure MAP. Here the engine air flow EAF is the mass air flow from the manifolds to the cylinders.

$$\text{Eq. I:} \qquad EAF = k * n_{vol} * (Ne * MAP) / IAT$$

In stead of using a separate intake manifold pressure sensor, an estimate of the absolute intake manifold pressure MAP may be used.

The estimate of the absolute intake manifold pressure MAP is generated in a third functional block 24 from data on intake air temperature IAT, estimated engine air flow MAF, and estimated throttle air flow $\theta_e$.

The estimated throttle air flow $\theta_e.$ is generated in a fourth functional block 26 from the following input parameters: an estimate of the absolute intake manifold pressure MAP, intake air temperature IAT, throttle area A, and the pressure upstream the throttle $P_0$.

The throttle air flow $\theta_e.$ may be described by the following equation:

$$\text{Eq. II} \qquad \theta_e. = P_0 A c f(MAP/P_0)/(IAT)^{-1/2}$$

Here c is a constant, which may be determined by experiments, f is a function of the quotient $MAP/P_0$.

The charater of the function f is well known in the art, since the flow over the throttle may be described as a flow over a valve or restriction. The actual characteristics of the function f may be determined be experimental mapping at different operating conditions of the engine.

The estimate of the intake manifold pressure MAP may thus be recursively updated by continuously updating the estimate of the intake manifold pressure via the the follwing equation:

$$\text{Eq. III} \qquad MAP = k*IAT*\int(MAF - EAF)dt$$

The engine intaket manifold pressure may bedetermined in a conventional integrator circuit or algoritm.

In a fifth functional block 28, the quotient Q between measured throttle air flow $\theta_m$ and estimated throttle air flow $\theta_e$ is formed.

The variable air intake manifold 4 is provided with a first and a second manifold valve 7, 8, each manoeuvrable by a respective actuator (not depicted in fig. 1), in turn connected to and controllable by the ECU 2. As is known in the art, by suitable control of the manifold valve settings, the effective length of manifold conduits can be selected depending on the engine speed, so that an advantageous volumetric efficiency can be provided at different engine speed intervals. More specifically, the effective length of manifold conduits can be selected so as to obtain a resonance, advantageous for the volumetric efficiency, in the manifold at more than one engine speed value.

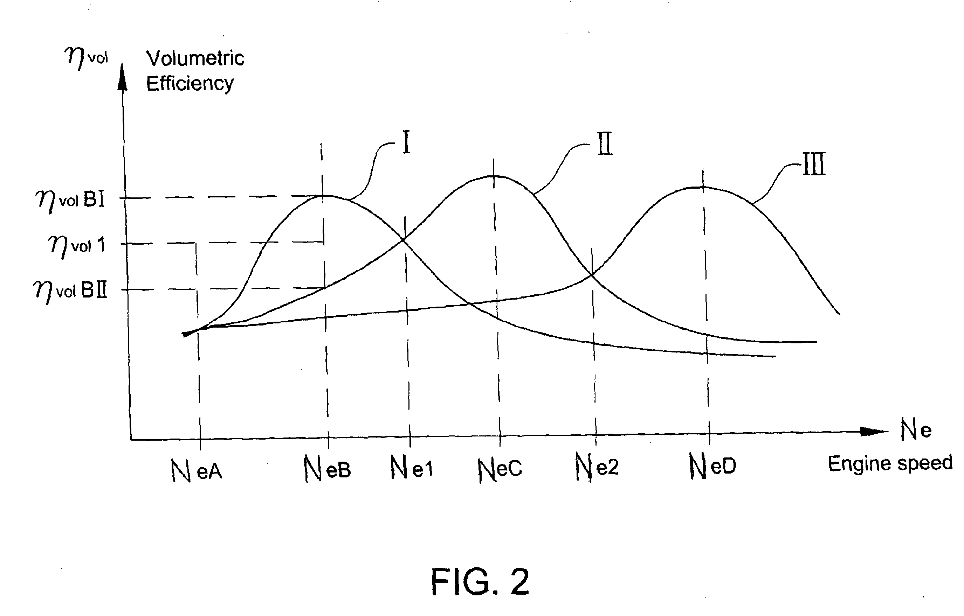

The variable air intake manifold 4 provides for three intake modes. Referring to fig. 2, the curve I presents the volumetric efficiency of the engine at a first intake mode, in which both manifold valves 7, 8 are closed. The curve II presents the volumetric efficiency at a second intake mode, in which the first manifold valve 7 is open and the second manifold valve 8 is closed. The curve III presents the volumetric efficiency at a third intake mode, in which both manifold valves 7, 8 are open.

The valves 7, 8 are operated to provide the greatest possible volumetric efficiency at each engine speed. Thereby, at engine speeds below a first threshold speed Ne1 the intake manifold 4 is set to the first intake mode (curve I), at engine speeds between the first threshold speed Ne1 and a second threshold speed Ne2 the intake manifold 4 is set to the second intake mode (curve II), and at engine speeds above the second threshold speed Ne2 the intake manifold 4 is set to the third intake mode (curve III).

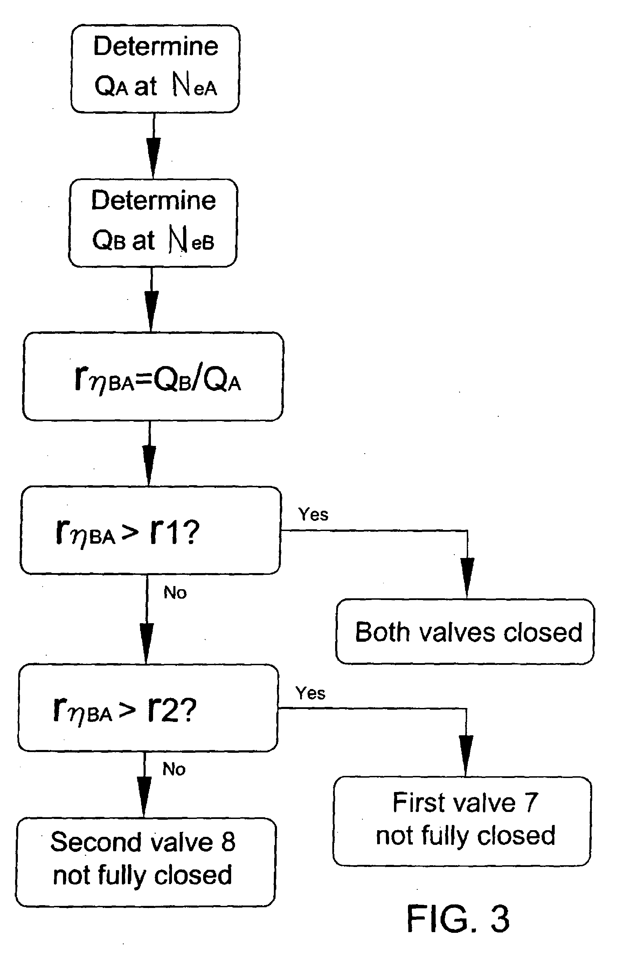

Referring to fig. 2 and fig. 3, the following steps are taken to establish a functional status of the variable air intake system in the first intake mode. More specifically the steps are take to establish whether both manifold valves 7, 8 are fully closed, and if any of them is not fully closed, to identify that valve. A first value QA of the quotient Q between measured throttle air flow $\theta_m$ and estimated throttle air flow $\theta_e$ at a first engine speed NeA, and a second value QB of the quotient Q between measured throttle air flow $\theta_m$ and estimated throttle air flow $\theta_e$ at a second engine speed NeB are determined. The second engine speed NeB is higher than the first engine speed NeA and within the engine speed interval of the first intake mode, i.e. below the first threshold speed Ne1.

By comparing the first and second values QA, QB of the quotient Q between measured throttle air flow $\theta_m$ and estimated throttle air flow $\theta_e$, a relative value $r_{nBA}$ of the quotient Q between measured throttle air flow $\theta_m$ and estimated throttle air flow $\theta_e$ is determined as the estimation ratio $r_{nBA}$ = QB/QA. The estimation ratio $r_{nBA}$ is compared to a first predetermined threshold value r1. If the estimation ratio $r_{nBA}$ is larger than the first threshold value r1, it is determined that both manifold valves 7, 8 are fully closed, i.e. the variable intake system is in the correct mode. IN a correctly operating system the estimation ratio would be equal to 1.

Determining the relative value $r_{nBA}$ of the volumetric efficiency as a ratio between the first and second values QA, QB of the volumetric efficiency is advantageous, since it makes any influence of sensor deviations very small.

The first threshold value r1 is determined based on a first reference value rBI related to a correct function of the variable air intake system, (in this example: both valves 7, 8 are closed), and on a second reference value rBII related to a non-correct function of the variable air intake system, (in this example: the first valve 7 is not fully closed). Referring to fig. 2, the first reference value rBI is determined as rBI = QBI /QA, where QBI is a value of the quotient Q between measured throttle air flow $\theta_m$ and estimated throttle air flow $\theta_e$ at the second engine speed NeB and at a correct function of the variable air intake system. The second reference value rBII is determined as rBII = QBII /QA, where QBII is a value of the quotient Q between measured throttle air flow $\theta_m$ and estimated throttle air flow $\theta_e$ at the same engine speed NeB and at a non-correct function of the variable air intake system. Preferably, the first threshold value r1 is predetermined as the mean value of the first reference value rBI and the second reference value rBII. However, alternatively the first threshold value r1 can be chosen to be closer to any of the first or second values rBI, rBII. Nevertheless, choosing the first threshold value r1 too close to the first reference value rBI may cause a false error detection of a functional system. Also, a threshold value r1 being too close to the second reference value rBII may cause a risk that a system error passes undetected.

Referring again to fig. 3, if the estimation ratio $r_{nBA}$ is smaller than the first threshold value r1, the estimation ratio $r_{nBA}$ is compared to a second predetermined threshold value r2. The second threshold value r2 is determined in a manner corresponding to the first threshold value r1. This means that the second threshold value r2 is chosen based on predetermined information on the difference in the quotient Q between measured throttle air flow $\theta_m$ and estimated throttle air flow $\theta_e$ in a case were the first manifold valve 7 is not fully closed compared to a case where the second manifold valve 8 is not fully closed. In the latter case, the quotient Q between measured throttle air flow $\theta_m$ and estimated throttle air flow $\theta_e$ follows curve III in fig. 2. In the case where the first manifold valve 7 is not fully closed, but the second manifold valve 8 is fully closed, the quotient Q between measured throttle air flow $\theta_m$ and estimated throttle air flow $\theta_e$ follows curve II in fig. 2. The second threshold value r2 is chosen based on a values of the quotient Q between measured throttle air flow $\theta_m$ and estimated throttle air flow $\theta_e$ that lies between values of the quotient Q between measured throttle air flow $\theta_m$ and estimated throttle air flow $\theta_e$ of curves II and III, at second engine speed NeB.

Thus, in this embodiment, if the estimation ratio $r_{nBA}$ is smaller than the second threshold value r2, it is determined that the second manifold valve 8 is not fully closed. If the estimation ratio $r_{nBA}$ is larger than the second threshold value r2, (but smaller than the first threshold value r1), it is determined that the first manifold valve 7 is not fully closed.

It should be noted that the second engine speed NeB is preferably chosen so as to give the largest possible difference regarding the estimation ratio in a case of correct function of the air intake system compared to a case of malfunction thereof.

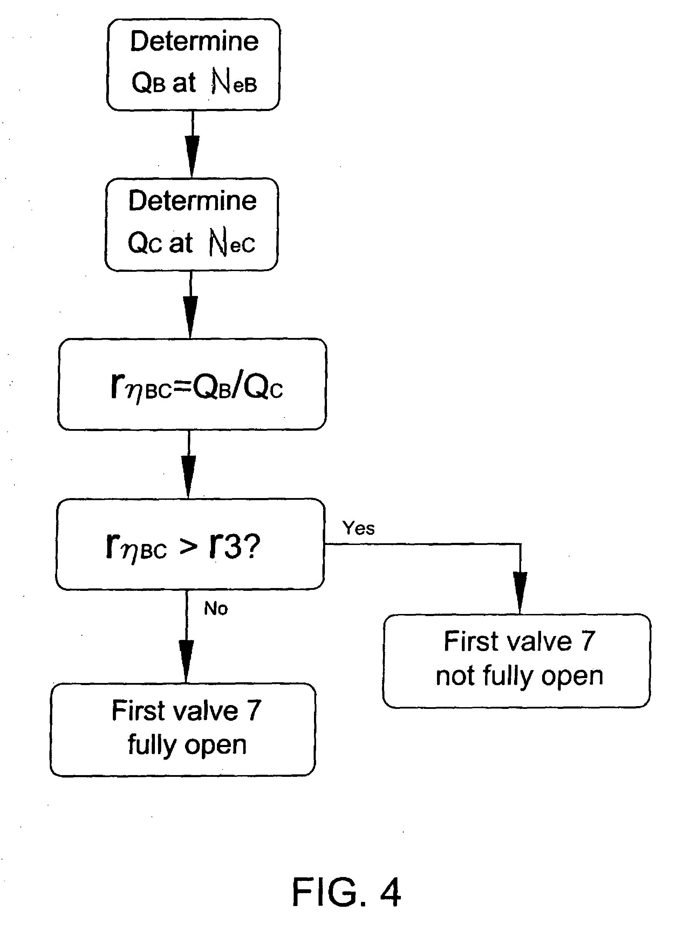

Referring to fig. 2 and fig. 4, the following steps are taken to check whether the first manifold valve 7 is fully open in the second intake mode. A first value QB of the quotient Q between measured throttle air flow $\theta_m$ and estimated throttle air flow $\theta_e$ at a first engine speed NeB, and a second value QC of the quotient Q between measured throttle air flow $\theta_m$ and estimated throttle air flow $\theta_e$ at a second engine speed NeC are determined. The first engine speed NeB is within the engine speed interval of the first intake mode, i.e. below the first threshold speed Ne1. The second engine speed NeC is higher than the first engine speed NeB and within the engine speed interval of the second intake mode, i.e. above the first threshold speed Ne1 and below the second threshold speed Ne2.

By comparing the first and second values QB, QC of the quotient Q between measured throttle air flow $\theta_m$ and estimated throttle air flow $\theta_e$, a relative value $r_{nBC}$ of the quotient Q between measured throttle air flow $\theta_m$ and estimated throttle air flow $\theta_e$ is determined as the estimation ratio $r_{nBC} = QB/QC$. The estimation ratio $r_{nBC}$ is compared to a third predetermined threshold estimation ratio r3. If the estimation ratio $r_{nBC}$ is larger than the third threshold value r3, it is determined that the first manifold valve 7 is not fully open. If the estimation ratio $r_{nBC}$ is smaller than the third threshold value r3, it is determined that the first manifold valve 7 is fully open, as it should be.

The third threshold value r3 is predetermined in a manner corresponding to the establishment of the first threshold value r1, described above.

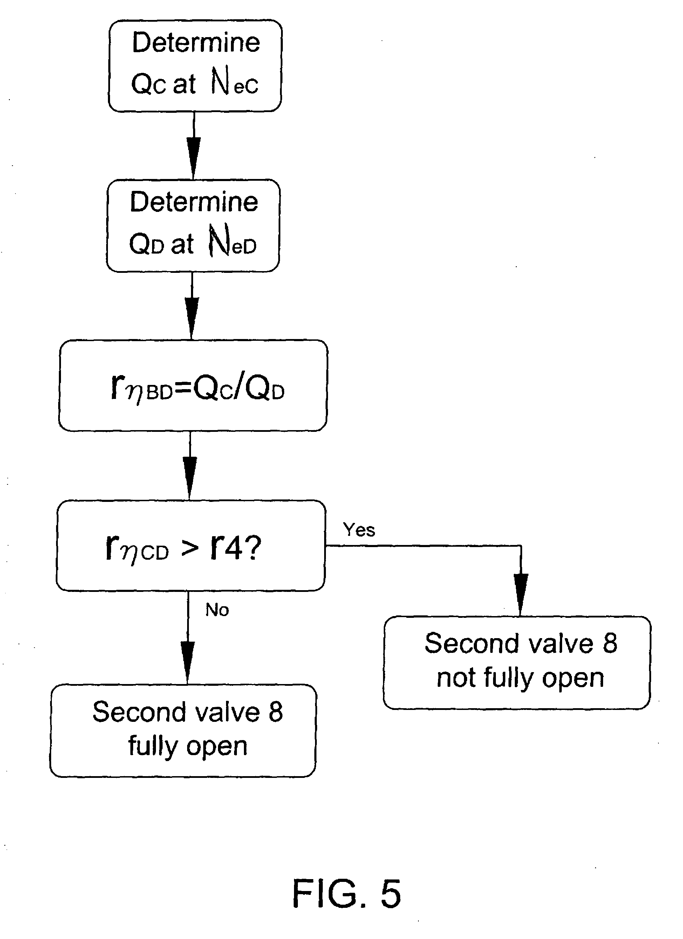

Referring to fig. 2 and fig. 5, the following steps are taken to check whether the second manifold valve 8 is fully open in the third intake mode. A first value QC of the quotient Q between measured throttle air flow $\theta_m$ and estimated throttle air flow $\theta_e$ at a first engine speed NeC, and a second value QD of the quotient Q between measured throttle air flow $\theta_m$ and estimated throttle air flow $\theta_e$ at a second engine speed NeD are determined. The first engine speed NeC is within the engine speed interval of the second intake mode, i.e. above the first threshold speed Ne1 and below the second threshold speed Ne2. The second engine speed NeD is higher than the first engine speed NeC and within the engine speed interval of the third intake mode, i.e. above the second threshold speed Ne2.

By comparing the first and second values QC, QD of the quotient Q between measured throttle air flow $\theta_m$ and estimated throttle air flow $\theta_e$, a relative value $r_{nCD}$ of the quotient Q between measured throttle air flow $\theta_m$ and estimated throttle air flow $\theta_e$ is determined as the estimation ratio $r_{nCD} = QC/QD$. The estimation ratio $r_{nCD}$ is compared to a fourth predetermined threshold estimation ratio r4. If the estimation ratio $r_{nCD}$ is larger than the fourth threshold value r4, it is determined that the second manifold valve 8 is not fully open. If the estimation ratio $r_{nCD}$ is smaller than the fourth threshold value r4, it is determined that the second manifold valve 8 is fully open, as it should be.

The fourth threshold value r4 is predetermined in a manner corresponding to the establishment of the first threshold value r1, described above.

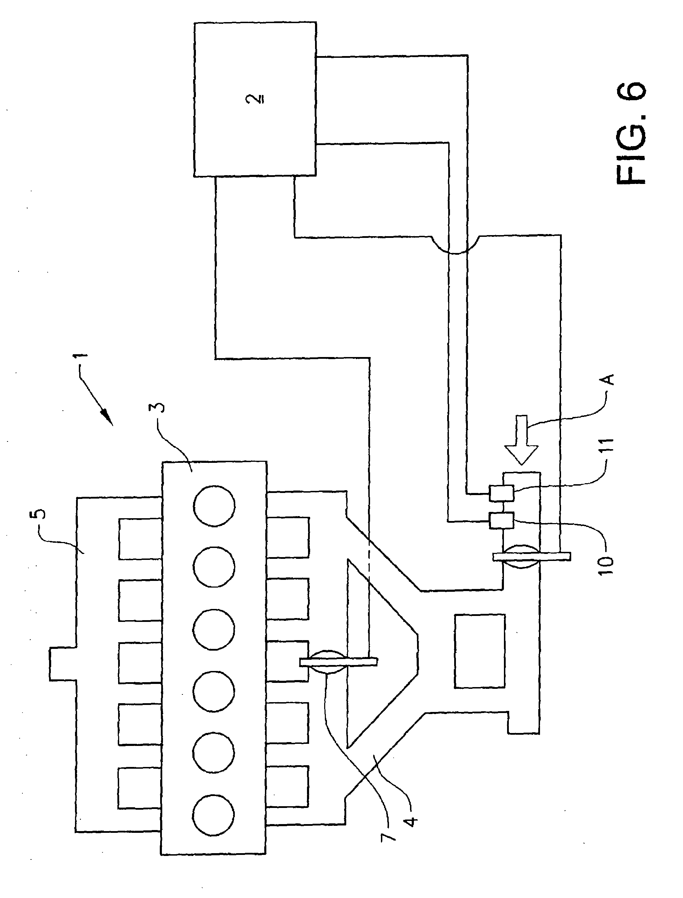

Above, an embodiment of the inventive method has been described in conjunction to a three mode air intake system. However, the invention is equally applicable to an air intake system with two intake modes, or a system with more than three intake modes. Below, an embodiment of the inventive method in conjunction to an air intake system with two intake modes is described in conjunction with fig. 6-9.

Fig. 6 shows schematically parts of an internal combustion engine 1 with engine control means, ECU 2, therefore, The engine has the same features as the one shown in fig. 1, but differs regarding the following:

The variable air intake manifold 4 is provided with a manifold valve 7, manoeuvrable by an actuator (not depicted in fig. 6), in turn connected to and controllable by the ECU 2. As is known in the art, by suitable control of the manifold valve 7 setting, the effective length of manifold conduits can be selected depending on the engine speed, so that an advantageous volumetric efficiency can be provided at different engine speed intervals.

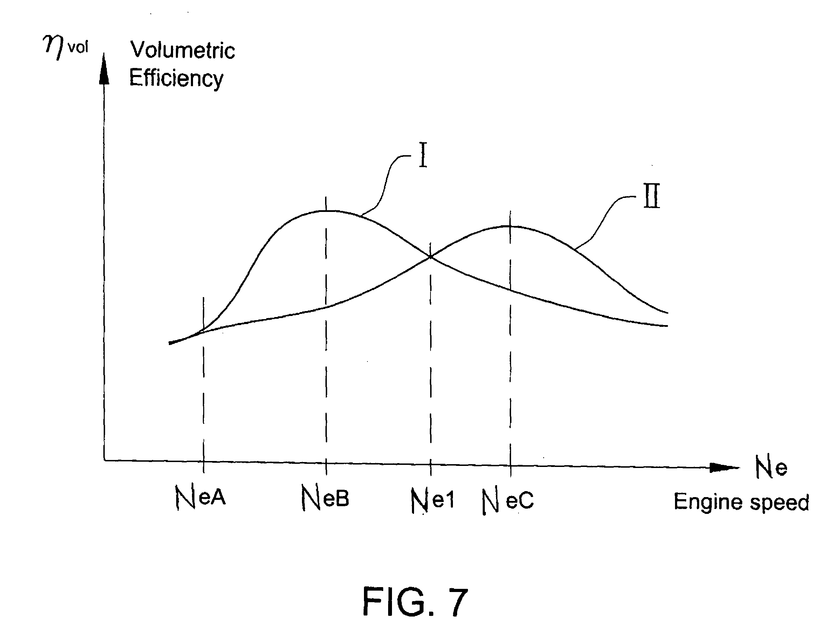

The variable air intake manifold 4 provides for two intake modes. Referring to fig. 7, the curve I presents the volumetric efficiency of the engine at a first intake mode, in which the manifold valve 7 is closed. The curve II presents the volumetric efficiency at a second intake mode, in which the manifold valve 7 is open. To provide for the greatest possible volumetric efficiency at each engine speed, at engine speeds below a threshold speed Ne1 the intake manifold 4 is set to the first intake mode (curve I), and at engine speeds above the threshold speed Ne1 the intake manifold 4 is set to the second intake mode (curve II).

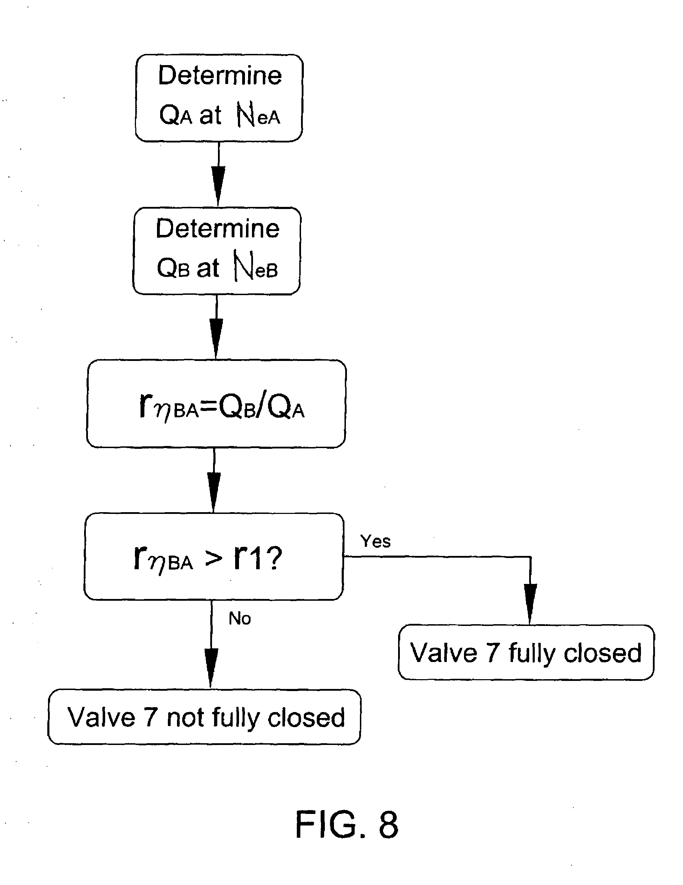

Referring to fig. 7 and fig. 8, steps taken to check whether the manifold valve 7 is fully closed in the first intake mode, correspond to the steps described above, with reference to fig. 2, to check whether both manifold valves 7, 8 are fully closed. Thus, a first and a second value QA, QB of the quotient Q between measured throttle air flow $\theta_m$ and estimated throttle air flow $\theta_e$ at a first and second engine speed NeA, NeB, respectively, are determined.

An estimation ratio $r_{nBA}$ = QB/QA is determined and compared to a first predetermined threshold estimation ratio r1. The first threshold value r1 is predetermined in a manner corresponding to what has been described above. If the estimation ratio $r_{nBA}$ is larger than the first threshold value r1, it is determined that the manifold valve 7 is fully closed, as it should be. If the estimation ratio $r_{nBA}$ is smaller than the first threshold value r1, it is determined that the manifold valve 7 is not fully closed.

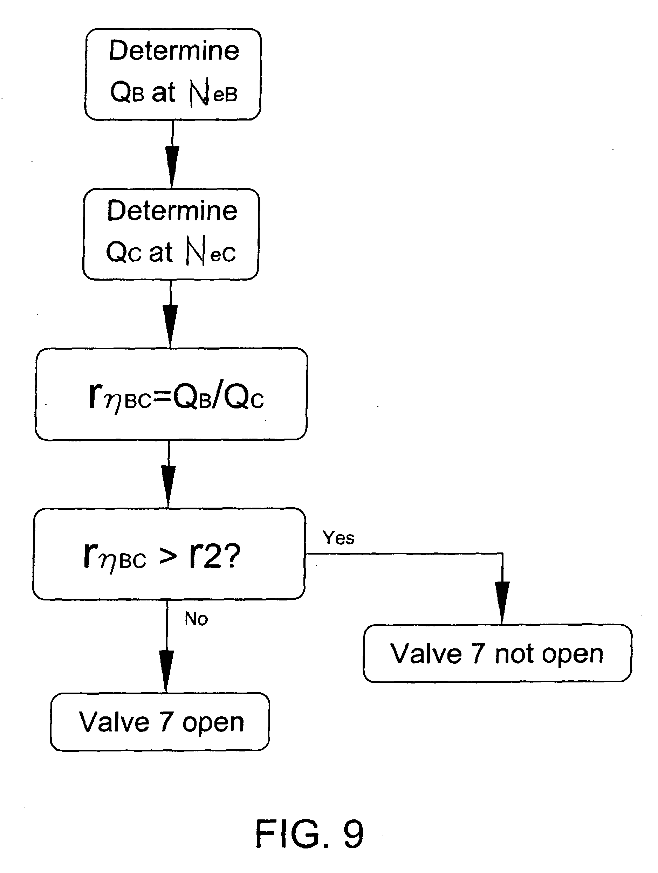

Referring to fig. 7 and fig. 9, the following steps are taken to check whether the manifold valve 7 is open in the second intake mode. A first and a second value QB, QC of the volumetric efficiency at a first and second engine speed NeB, NeC, respectively, are determined. The first engine speed NeB is within the engine speed interval of the first intake mode, and the second engine speed NeC is within the engine speed interval of the second intake mode.

An estimation ratio $r_{nBC}$ = QB /QC is determined and compared to a second predetermined threshold estimation ratio r2. The second threshold value r2 is predetermined in a manner corresponding to what has been described above. If the estimation ratio $r_{nBC}$ is larger than the second threshold value r2, it is determined that the manifold valve 7 is not open.

Above, comparing the first and second values of the volumetric efficiency has been described as comprising determining a relative value $r_{nAB}$, $r_{nBC}$, $r_{ncD}$ of the volumetric efficiency as the estimation ratio $r_{nAB}$=QA/QB, $r_{nBC}$=QB/QC and $r_{nCD}$ =QC/QD, respectively. However, alternatives are possible for the comparison of the first and second values of the volumetric efficiency. For example, said comparison could comprise determining a relative value of the quotient Q between measured throttle air flow $\theta_m$ and estimated throttle air flow $\theta_e$ as the efficiency difference $r_{nAB}$=QA - QB, $r_{nBC}$=QB - QC and $r_{nCD}$=QC - QD, respectively.

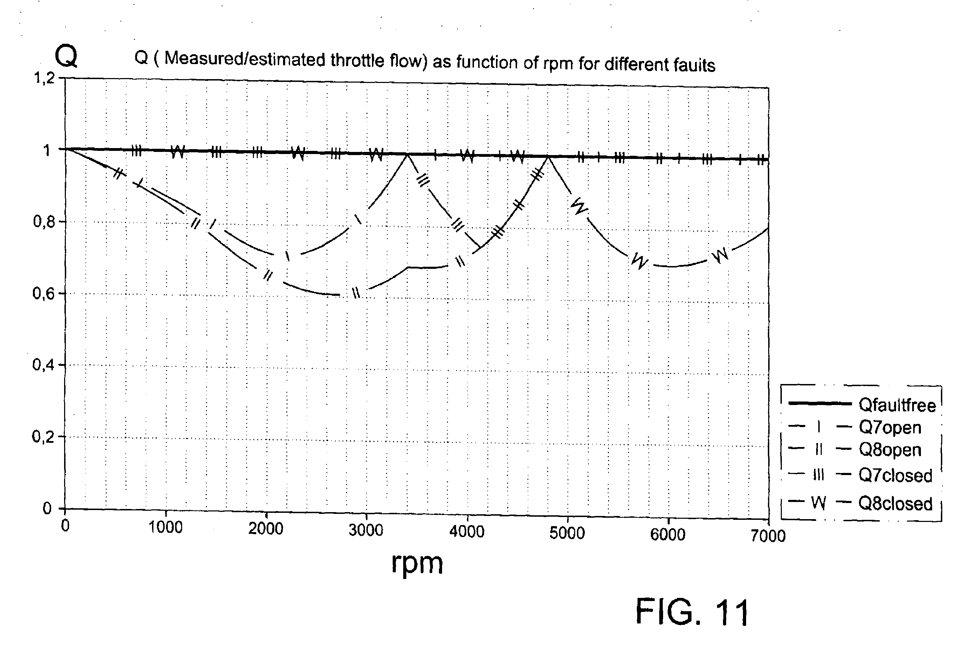

In figure 11 values of the quotinet Q as a function of rpm for different faults are shown. As may be noted the quotient Q equlas 1 for all rpms at a fault free system.

In the event valve 7 in figure 1 stays open permanently, the values of the quotient Q will follow the second curve (+). As may be noted the quotient Q will drop to values below 1 (at 0,7 at its lowest) in the interval 1000 - 3400 rpm. In the event valve 8 in figure 1 stays open permanently, the values of the quotient Q will follow the third curve (*). As may be noted the quotient Q will drop to values below 1 (at 0,6 at its lowest) in the interval 1000 - 4800 rpm. In the event valve 7 in figure 1 stays closed permanently, the values of the quotient Q will follow the fourth curve (-). As may be noted the quotient Q will drop to values below 1 (at 0,7 at its lowest) in the interval 3400 - 4800 rpm. Finally, in the event valve 8 in figure 1 stays closed permanently, the values of the quotient Q will follow the fifth curve (o). As may be noted the quotient Q will drop to values below 1 (at 0,7 at its lowest) from 4800 rpm and up. As canbe noted each individual fault is associated with a curve having a particular pattern. Different faults may thus be separated from each other by estimating the quotient at a number of rpms..

**Claims**

1. A method for diagnosing a variable air intake system (4, 7, 8) of an internal combustion engine (1), comprising the steps of

   - determining a first value (QA, QB, QC) of an air intake related parameter at a first engine speed (NeA, NeB, NeC),
   - determining a second value (QB, QC, QD) of the air intake related parameter at a second engine speed (NeB, NeC, NeD),
   - comparing the first and second values (QA, QB, QC, QD) of the air intake related parameter, and
   - establishing, based on the comparison of the first and second values (QA, QB, QC, QD) of the air intake related parameter, a functional status of the variable air intake system, *characterised in* **that** the air intake related parameter is a measure of the quotient Q between measured throttle air flow $\theta_m$ and estimated throttle air flow $\theta_e$.

2. A method according to claim 1, *characterized in* **that** the estimated throttle air flow $\theta_e$ is generated as a function of an estimate $P_e$ of the intake manifold pressure.

3. A method according to claim 2, *characterized in* **that** the estimate $P_e$ of the intake manifold pressure is generated from an estimate of engine air flow generated from volumetric efficiency data.

4. A method according to claim 2, ***characterized in*** **that** the estimate $P_e$ of the intake manifold pressure is generated from an estimate of an integral over the difference between air mass flow over the throttle (MAF) and engine air flow (EAF) generated from volumetric efficiency data.

5. A method according to any of the preceding claims, wherein the functional status of the variable air intake system refers to the functional status of at least one valve (7, 8) in the variable intake system.

6. A method according to any of the preceding claims, wherein the step of comparing the first and second values (QA, QB, QC, QD) of the air intake related parameter comprises determining a relative value ($r_{nAB}$, $r_{nBC}$, $r_{nCD}$) of the air intake related parameter, based on the first and second values (QA, QB, QC, QD) of the air intake related parameter, the method further comprising the step of comparing the relative value ($r_{nAB}$, $r_{nBC}$, $r_{ncD}$) of the air intake related parameter to a predetermined threshold value (r1, r2, r3, r4).

7. A method according to claim 6, wherein the step of determining a relative value ($r_{nAB}$, $r_{nBC}$, $r_{nCD}$) of the air intake related parameter, comprises determining the relative value ($r_{nAB}$, $r_{nBC}$, $r_{nCD}$) of the air intake related parameter as a ratio between the first and second values (QA, QB, QC, QD) of the air intake related parameter.

8. A method according to claim 6 or 7, wherein the threshold value (r1, r2, r3, r4) is dependent on a value QBI) of the air intake related parameter at a correct function of the variable air intake system, and on a value (QBII) of the air intake related parameter at a non-correct function of the variable air intake system.

9. An internal combustion engine comprising a variable air intake system (4, 7, 8) and engine control means (2), wherein the engine control means (2) is adapted to determine a first value (QA, QB, QC) of an air intake related parameter at a first engine speed (NeA, NeB, NeC), and a second value (QB, QC, QD) of the air intake related parameter at a second engine speed (NeB, NeC, NeD), and in that the engine control means (2) is further adapted to compare the first and second values of the air intake related parameter, and to establish, based on the comparison of the first and second values (QA, QB, QC, QD) of the air intake related parameter, a functional status of the variable air intake system, ***characterized in*** **that** said engine control system is adapted to establish a functional status of the variable air intake system based on an air intake related parameter which is a measure of the quotient between measured throttle air flow $\theta_m$ and estimated throttle air flow $\theta_e$.

10. An internal combustion engine according to claim 9, **characterized in that** the estimated throttle air flow $\theta_e$ is generated as a function of an estimate $P_e$ of the intake manifold pressure.

11. An internal combustion engine according to claim 10, **characterized in that** the estimate Pe of the intake manifold pressure is generated from an estimate of engine air flow generated from volumetric efficiency data.

12. An internal combustion engine according to claim 10, **characterized in that** the estimate Pe of the intake manifold pressure is generated from an estimate of an integral over the difference between air mass flow over the throttle (MAF) and engine air flow (EAF) generated from volumetric efficiency data.

13. An internal combustion engine according to any of claims 9 - 12, wherein the functional status of the variable air intake system refers to the functional status of at least one valve (7, 8) in the variable intake system.

14. An internal combustion engine according to any of claims 9 - 13, wherein the engine control means (2) is adapted to determine a relative value ($r_{nAB}$, $r_{nBC}$, $r_{nCD}$) of the air intake related parameter, based on the first and second values (QA, QB, QC, QD) of the air intake related parameter, the engine control means (2) further being adapted to compare the relative value ($r_{nAB}$, $r_{nBC}$, $r_{nCD}$) of the air intake related parameter to a predetermined threshold value (r1, r2, r3, r4).

15. An internal combustion engine according to claim 14, wherein the engine control means (2) is adapted to determine the relative value ($r_{nAB}$, $r_{nBC}$, $r_{nCD}$) of the air intake related parameter as a ratio between the first and second values (QA, QB, QC, QD) of the air intake related parameter.

16. An internal combustion engine according to claim 14 or 15, wherein the threshold value (r1, r2, r3, r4) is dependent on a value (QBI) of the air intake related parameter at a correct function of the variable air intake system, and the second reference value (rBII) is dependent on a value (QBII) of the air intake related parameter at a non-correct function of the variable air intake system.

**Patentansprüche**

1.  Diagnoseverfahren für ein variables Luftansaugsystem (4, 7, 8) eines Verbrennungsmotors (1) mit den Schritten:

    Bestimmen eines ersten Wertes (QA, QB, QC) eines mit einer Luftansaugung in Beziehung stehenden Parameters bei einer ersten Motordrehzahl (NeA, NeB, NeC);
    Bestimmen eines zweiten Wertes (QB, QC, QD) des mit der Luftansaugung in Beziehung stehenden Parameters bei einer zweiten Motordrehzahl (NeB, NeC, NeD);
    Vergleichen des ersten und des zweiten Wertes (QA, QB, QC, QD) des mit der Luftansaugung in Beziehung stehenden Parameters; und
    Einrichten eines funktionellen Zustands des variablen Luftansaugsystems basierend auf dem Vergleich zwischen dem ersten und dem zweiten Wert (QA, QB, QC, QD) des mit der Luftansaugung in Beziehung stehenden Parameters;
    **dadurch gekennzeichnet, dass**
    der mit der Luftansaugung in Beziehung stehende Parameter ein Maß des Quotienten Q zwischen einem gemessenen Drosselklappenluftdurchsatz $\theta_m$ und einem geschätzten Drosselklappenluftdurchsatz $\theta_e$ ist.

2.  Verfahren nach Anspruch 1, **dadurch gekennzeichnet, dass** der geschätzte Drosselklappenluftdurchsatz $\theta_e$ als Funktion eines Schätzwertes $P_e$ des Ansaugkrümmerdrucks erzeugt wird.

3.  Verfahren nach Anspruch 2, **dadurch gekennzeichnet, dass** der Schätzwertes $P_e$ des Ansaugkrümmerdrucks von einem Schätzwert eines Motorluftdurchsatzes erzeugt wird, der von volumetrischen Wirkungsgraddaten erzeugt wird.

4.  Verfahren nach Anspruch 2, **dadurch gekennzeichnet, dass** der Schätzwertes $P_e$ des Ansaugkrümmerdrucks von einem Schätzwert eines Integrals über die Differenz zwischen dem Luftmassendurchsatz über die Drosselklappe (MAF) und einem von volumetrischen Wirkungsgraddaten erzeugten Motorluftdurchsatz (EAF) erzeugt wird.

5.  Verfahren nach einem der vorangehenden Ansprüche, wobei der funktionelle Zustand des variablen Luftansaugsystems sich auf den funktionellen Zustand mindestens eines Ventils (7, 8) im variablen Luftansaugsystem bezieht.

6.  Verfahren nach einem der vorangehenden Ansprüche, wobei der Schritt zum Vergleichen des ersten und des zweiten Wertes (QA, QB, QC, QD) des mit der Luftansaugung in Beziehung stehenden Parameters das Bestimmen eines Relativwertes ($r_{nAB}$, $r_{nBC}$, $r_{nCD}$) des mit der Luftansaugung in Beziehung stehenden Parameters basierend auf dem ersten und dem zweiten Wert (QA, QB, QC, QD) des mit der Luftansaugung in Beziehung stehenden Parameters aufweist, und wobei das Verfahren ferner den Schritt zum Vergleichen des Relativwertes ($r_{nAB}$, $r_{nBC}$, $r_{nCD}$) des mit der Luftansaugung in Beziehung stehenden Parameters mit einem vorgegebenen Schwellenwert (r1, r2, r3, r4) aufweist.

7.  Verfahren nach Anspruch 6, wobei der Schritt zum Bestimmen eines Relativwertes ($r_{nAB}$, $r_{nBC}$, $r_{nCD}$) des mit der Luftansaugung in Beziehung stehenden Parameters das Bestimmen des Relativwertes ($r_{nAB}$, $r_{nBC}$, $r_{nCD}$) des mit der Luftansaugung in Beziehung stehenden Parameters als ein Verhältnis zwischen dem ersten und dem zweiten Wert (QA, QB, QC, QD) des mit der Luftansaugung in Beziehung stehenden Parameters aufweist.

8.  Verfahren nach Anspruch 6 oder 7, wobei der Schwellenwert (r1, r2, r3, r4) von einem Wert (QBI) des mit der Luftansaugung in Beziehung stehenden Parameters bei einer korrekten Funktion des variablen Luftansaugsystems und von einem Wert (QBII) des mit der Luftansaugung in Beziehung stehenden Parameters bei einer fehlerhaften Funktion des variablen Luftansaugsystems abhängig ist.

9.  Verbrennungsmotor mit einem variablen Luftansaugsystem (4, 7, 8) und einer Motorsteuerungseinrichtung (2), wobei die Motorsteuerungseinrichtung (2) dazu geeignet ist, einen ersten Wert (QA, QB, QC) eines mit der Luftansaugung in Beziehung stehenden Parameters bei einer ersten Motordrehzahl (NeA, NeB, NeC) und einen zweiten Wert (QB, QC, QD) des mit der Luftansaugung in Beziehung stehenden Parameters bei einer zweiten Motordrehzahl (NeB, NeC, NeD) zu bestimmen, und wobei die Motorsteuerungseinrichtung (2) ferner dazu geeignet ist, den ersten und den zweiten Wert des mit der Luftansaugung in Beziehung stehenden Parameters zu vergleichen und basierend auf dem Vergleich zwischen dem ersten und dem zweiten Wert (QA, QB, QC, QD) des mit der Luftansaugung in Beziehung stehenden Parameters einen funktionellen Zustand des variablen Luftansaugsystems einzurichten; **dadurch gekennzeichnet, dass**

das Motorsteuerungssystem dazu geeignet ist, einen funktionellen Zustand des variablen Luftansaugsystems basierend auf einem mit der Luftansaugung in Beziehung stehenden Parameter einzurichten, der ein Maß des Quotienten zwischen einem gemessenen Drosselklappenluftdurchsatz $\theta_m$ und einem geschätzten Drosselklappenluftdurchsatz $\theta_e$ ist.

10. Verbrennungsmotor nach Anspruch 9, **dadurch gekennzeichnet, dass** der geschätzte Drosselklappenluftdurchsatz $\theta_e$ als Funktion eines Schätzwertes $P_e$ des Ansaugkrümmerdrucks erzeugt wird.

11. Verbrennungsmotor nach Anspruch 10, **dadurch gekennzeichnet, dass** der Schätzwertes $P_e$ des Ansaugkrümmerdrucks von einem Schätzwert eines Motorluftdurchsatzes erzeugt wird, der von volumetrischen Wirkungsgraddaten erzeugt wird.

12. Verbrennungsmotor nach Anspruch 10, **dadurch gekennzeichnet, dass** der Schätzwertes $P_e$ des Ansaugkrümmerdrucks von einem Schätzwert eines Integrals über die Differenz zwischen dem Luftmassendurchsatz über die Drosselklappe (MAF) und einem von volumetrischen Wirkungsgraddaten erzeugten Motorluftdurchsatz (EAF) erzeugt wird.

13. Verbrennungsmotor nach einem der Ansprüche 9 bis 12, wobei der funktionelle Zustand des variablen Luftansaugsystems sich auf den funktionellen Zustand mindestens eines Ventils (7, 8) im variablen Luftansaugsystem bezieht.

14. Verbrennungsmotor nach einem der Ansprüche 9 bis 13, wobei die Motorsteuerungseinrichtung (2) dazu geeignet ist, einen Relativwert ($r_{nAB}$, $r_{nBC}$, $r_{nCD}$) des mit der Luftansaugung in Beziehung stehenden Parameters basierend auf dem ersten und dem zweiten Wert (QA, QB, QC, QD) des mit der Luftansaugung in Beziehung stehenden Parameters zu bestimmen, und wobei die Motorsteuerungseinrichtung (2) ferner dazu geeignet ist, den Relativwert ($r_{nAB}$, $r_{nBC}$, $r_{nCD}$) des mit der Luftansaugung in Beziehung stehenden Parameters mit einem vorgegebenen Schwellenwert (r1, r2, r3, r4) zu vergleichen.

15. Verbrennungsmotor nach Anspruch 14, wobei die Motorsteuerungseinrichtung (2) dazu geeignet ist, den Relativwert ($r_{nAB}$, $r_{nBC}$, $r_{nCD}$) des mit der Luftansaugung in Beziehung stehenden Parameters als ein Verhältnis zwischen dem ersten und dem zweiten Wert (QA, QB, QC, QD) des mit der Luftansaugung in Beziehung stehenden Parameters zu bestimmen.

16. Verbrennungsmotor nach Anspruch 14 oder 15, wobei der Schwellenwert (r1, r2, r3, r4) von einem Wert (QBI) des mit der Luftansaugung in Beziehung stehenden Parameters bei einer korrekten Funktion des variablen Luftansaugsystems und der zweite Referenzwert (rBII) von einem Wert (QBII) des mit der Luftansaugung in Beziehung stehenden Parameters bei einer fehlerhaften Funktion des variablen Luftansaugsystems abhängig ist.


**Revendications**

1. Procédé de diagnostic d'un système d'admission d'air variable (4, 7, 8) d'un moteur (1) à combustion interne, comprenant les étapes suivantes.

   - détermination d'une première valeur (QA, QB, QC) d'un paramètre relatif à l'admission d'air pour une première vitesse (NeA, NeB, NeC) du moteur,
   - détermination d'une deuxième valeur (QB, QC, QD) du paramètre relatif à l'admission d'air pour une deuxième vitesse (NeB, NeC, NeD) du moteur,
   - comparaison des première et deuxième valeurs (QA, QB, QC, QD) du paramètre relatif à l'admission d'air, et
   - établissement, en fonction de la comparaison des première et deuxième valeurs (QA, QB, QC, QD) du paramètre relatif à l'admission d'air, d'un statut fonctionnel du système d'admission d'air variable, **caractérisé en ce que** le paramètre relatif à l'admission d'air est une mesure du quotient Q entre le débit d'air $\theta_m$ mesuré à l'étranglement et le débit d'air $\theta_e$ estimé à l'étranglement.

2. Procédé selon la revendication 1, **caractérisé en ce que** le débit d'air $\theta_e$ estimé à l'étranglement est obtenu en fonction d'une estimation $P_e$ de la pression d'admission au collecteur.

3. Procédé selon la revendication 2, **caractérisé en ce que** l'estimation de la valeur de la pression $P_e$ d'admission au collecteur est faite à partir d'une estimation du débit d'air à travers le moteur, à partir de données d'efficacité volumétriques.

4. Procédé selon la revendication 2, **caractérisé en ce que** l'estimation de la valeur de pression $P_e$ d'admission au collecteur est faite à partir d'une estimation d'une intégrale suivant la différence entre flux massique d'air passant par l'étranglement (MAF) et le débit d'air à travers le moteur (EAF), à partir de données d'efficacité volumétrique.

5. Procédé selon l'une quelconque des revendications précédentes, dans lequel le statut de fonctionnement du système d'admission d'air variable correspond au statut fonctionnel d'au moins une soupape (7, 8) dans le système d'admission variable.

6. Procédé selon l'une quelconque des revendications précédentes, dans lequel l'étape de comparaison des première et deuxième valeurs (QA, QB, QC, QD) du paramètre relatif à l'admission d'air comprend le fait de déterminer une valeur relative ($r_{nAB}$, $r_{nBC}$, $r_{nCD}$) du paramètre relatif à l'admission d'air, en fonction des première et deuxième valeurs (QA, QB, QC, QD) du paramètre relatif à l'admission d'air, le procédé comprenant en outre l'étape de comparaison de la valeur relative ($r_{nAB}$, $r_{nBC}$, $r_{nCD}$) du paramètre relatif à l'admission d'air à une valeur seuil prédéterminée (r1, r2, r3, r4).

7. Procédé selon la revendication 6, dans lequel l'étape de détermination d'une valeur relative ($r_{nAB}$, $r_{nBC}$, $r_{nCD}$) du paramètre relatif à l'admission d'air comprend la détermination de la valeur relative ($r_{nAB}$, $r_{nBC}$, $r_{nCD}$) du paramètre relatif à l'admission d'air en tant que rapport entre les première et deuxième valeurs (QA, QB, QC, QD) du paramètre relatif à l'admission d'air.

8. Procédé selon la revendication 6 ou 7, dans lequel la valeur seuil (r1, r2, r3, r4) dépend d'une valeur (QBI) du paramètre relatif à l'admission d'air lors d'un fonctionnement correct du système d'admission d'air variable et d'une valeur (QBII) du paramètre relatif à l'admission d'air lors d'un fonctionnement non correct du système d'admission d'air variable.

9. Moteur à combustion interne contenant un système d'admission d'air variable (4, 7, 8) et un moyen (2) de régulation du moteur, dans lequel le moyen (2) de régulation du moteur est conçu pour déterminer une première valeur (QA, QB, QC) d'un paramètre relatif à l'admission d'air à une première vitesse de moteur (NeA, NeB, NeC) et une deuxième valeur (QB, QC, QD) du paramètre relatif à l'admission d'air (NeB, NeC, NeD), et où le moyen (2) de régulation du moteur est en outre conçu pour comparer les première et deuxième valeurs du paramètre relatif à l'admission d'air et pour établir, d'après cette comparaison des première et deuxième valeurs (QA, QB, QC, QD) du paramètre relatif à l'admission d'air, un statut de fonctionnement du système d'admission d'air, **caractérisé en ce que** ledit système de régulation du moteur est conçu pour établir un statut fonctionnel du système d'admission d'air variable en fonction d'un paramètre relatif à l'admission d'air, qui est une mesure du quotient entre le entre le débit d'air $\theta_m$ mesuré à l'étranglement et le débit d'air estimé à l'étranglement $\theta_e$.

10. Moteur à combustion interne selon la revendication 9, **caractérisé en ce que** l'estimation du débit d'air $\theta_e$ à l'étranglement est faite d'après une estimation $P_e$ de la pression d'admission au collecteur.

11. Moteur à combustion interne selon la revendication 10, **caractérisé en ce que** l'estimation de la pression $P_e$ d'admission au collecteur est faite d'après une estimation du débit d'air à travers le moteur, d'après des données d'efficacité volumétrique.

12. Moteur à combustion interne selon la revendication 10, **caractérisé en ce que** l'estimation Pe de la pression d'admission de collecteur est faite d'après une estimation d'une intégrale suivant la différence entre flux massique d'air traversant l'étranglement (MAF) et le débit d'air à travers le moteur (EAF), d'après des données d'efficacité volumétrique.

13. Moteur à combustion interne selon l'une quelconque des revendications 9 à 12, dans lequel le statut de fonctionnement du système d'admission d'air variable correspond au statut d'au moins une soupape (7, 8) dans le système d'admission d'air variable.

**14.** Moteur à combustion interne selon l'une quelconque des revendication 9 à 13, dans lequel le moyen (2) de régulation du moteur est conçu pour déterminer une valeur relative ($r_{nAB}$, $r_{nBC}$, $r_{nCD}$) du paramètre relatif à l'admission d'air, en fonction des première et deuxième valeurs (QA, QB, QC, QD) du paramètre relatif à l'admission d'air, le moyen (2) de régulation du moteur étant en outre conçu pour comparer la valeur relative ($r_{nAB}$, $r_{nBC}$, $r_{nCD}$) du paramètre relatif à l'admission d'air à une valeur seuil prédéterminée (r1, r2, r3, r4).

**15.** Moteur à combustion interne selon la revendication 14, dans lequel le moyen (2) de régulation du moteur est conçu pour déterminer la valeur relative ($r_{nAB}$, $r_{nBC}$, $r_{nCD}$) du paramètre relatif à l'admission d'air sous forme de rapport entre les première et deuxième valeurs (QA, QB, QC, QD) du paramètre relatif à l'admission d'air.

**16.** Moteur à combustion interne selon la revendication 14 ou 15, dans lequel la valeur seuil (r1, r2, r3, r4) est dépendante d'une valeur (QBI) du paramètre relatif à l'admission d'air pour un fonctionnement correcte du système d'admission d'air variable, et où la deuxième valeur de référence (rBII) dépend d'une valeur (QBII) du paramètre relatif à l'admission d'air pour un fonctionnement non correct du système d'admission d'air variable.

FIG. 1

FIG. 2

EP 1 770 259 B1

Determine
$Q_A$ at $N_{eA}$

Determine
$Q_B$ at $N_{eB}$

$r\eta_{BA} = Q_B/Q_A$

$r\eta_{BA} > r1?$ — Yes → Both valves closed

No

$r\eta_{BA} > r2?$ — Yes → First valve 7 not fully closed

No

Second valve 8 not fully closed

FIG. 3

Determine
$Q_B$ at $N_{eB}$

Determine
$Q_C$ at $N_{eC}$

$r\eta_{BC} = Q_B / Q_C$

$r\eta_{BC} > r3?$

Yes

No

First valve 7
fully open

First valve 7
not fully open

# FIG. 4

Determine
$Q_C$ at $N_{eC}$

↓

Determine
$Q_D$ at $N_{eD}$

↓

$r_{\eta BD} = Q_C/Q_D$

↓

$r_{\eta CD} > r4?$ —— Yes ——→

No

↓

Second valve 8
fully open

Second valve 8
not fully open

FIG. 5

FIG. 6

FIG. 7

Determine
$Q_A$ at $N_{eA}$

Determine
$Q_B$ at $N_{eB}$

$r_{\eta BA} = Q_B/Q_A$

$r_{\eta BA} > r1?$

Yes

No

Valve 7 fully closed

Valve 7 not fully closed

FIG. 8

Determine
$Q_B$ at $N_{eB}$

Determine
$Q_C$ at $N_{eC}$

$r_{\eta BC} = Q_B / Q_C$

$r_{\eta BC} > r2?$

Yes

No

Valve 7 not open

Valve 7 open

FIG. 9

Engine speed →
CPS Mode →
VVT Position →
VIS Position →

<u>20</u>
Estimation of volumetric efficiency

← Exhaust backpressure

Volumetric efficiency

Estimated intake mainifold pressure

Engine speed →

Intake air temperature →

<u>22</u>
Estimation of Engine air flow

<u>26</u>
Estimation of throttle flow

← Intake air temperature
← Throttle area
← Pressure upstream thtottle

Estimated engine air flow

Estimated throttle air flow

Intake air temperature →

<u>24</u>
Estimation of intake mainifold pressure

Measured throttle air flow →

<u>28</u>
Measured/estimate air flow

FIG. 10

Q ( Measured/estimated throttle flow) as function of rpm for different faults

Legend:
——— Qfaultfree
— I — Q7open
— II — Q8open
— III — Q7closed
— W — Q8closed

FIG. 11

EP 1 770 259 B1

**EP 1 770 259 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5138874 A
- US 5638785 A
- DE 19727669
- US 6662640 B2